# FASCICULE DE BREVET EUROPEEN

(11) **EP 2 070 850 B1**
(45) Date de publication et mention de la délivrance du brevet: **26.09.2012**
(21) Numéro de dépôt: 08170856.2
(22) Date de dépôt: 05.12.2008
(51) Int. Cl.: B65G 67/22, B65G 69/04

(54) **Installation de chargement de produits divisés dans des bennes**
Beladeanlage von Produkten, die auf verschiedene Kübeln verteilt sind
Installation for loading divided products in skips

(30) Priorité: 10.12.2007 FR 0759688
(43) Date de publication de la demande: 17.06.2009
(73) Titulaire: Brunone, René, 27950 Saint Marcel (FR)
(72) Inventeur: Brunone, René, 27950 Saint Marcel (FR)
(74) Mandataire: Blot, Philippe Robert Emile

(56) Documents cités:
- DE-U1- 8 907 121
- SU-A1- 701 907
- SU-A1- 1 291 517
- SU-A1- 1 703 592

## Description

La présente invention concerne une installation de chargement de produits divisés dans une benne mobile ouverte vers le haut, du type comprenant un stockage de produits divisés et des moyens de transfert des produits divisés depuis le stockage dans la benne.

Une telle installation est connue de FR-28 93 503, qui décrit une installation dont les moyens de transfert comprennent une manche verticale débouchant dans la benne, et un convoyeur apte à transférer les produits à charger depuis le stockage jusqu'à la manche. La manche et le convoyeur sont montés sur un châssis mobile par rapport au stockage, de telle sorte que les produits peuvent être distribués en une couche d'épaisseur sensiblement constante sur toute la longueur de la benne mobile.

Une telle installation est techniquement complexe.

Par ailleurs, SU 1 703 592 décrit une installation de chargement conforme au préambule de la revendication 1.

Dans ce contexte, l'invention vise à proposer une installation de chargement qui soit techniquement plus simple.

Dans ce but, l'invention porte sur une installation conforme à la revendication 1.

L'installation peut également présenter une ou plusieurs des caractéristiques ci-dessous, considérées individuellement ou selon toutes les combinaisons techniquement possibles :
- les moyens de transfert comprennent une manche télescopique fixe longitudinalement par rapport au stockage.
- les moyens de transfert comprennent des moyens pour sélectivement obturer ou dégager une extrémité libre de la manche.
- les moyens de guidage comprennent des moyens pour déplacer le repère visuel longitudinalement, des moyens de contrôle programmables des moyens de déplacement, et des moyens pour entrer dans les moyens de contrôle des paramètres de fonctionnement relatifs à chaque benne à charger, ces paramètres comprenant au moins des caractéristiques géométriques de chaque benne à charger et un paramètre représentatif de la quantité de produits à charger dans chaque benne.

- les moyens de contrôle comprennent des moyens pour déterminer pour chaque benne, à partir des paramètres de fonctionnement correspondant à ladite benne, au moins une vitesse de déplacement du repère visuel.
- la manche présente une extrémité libre de libération des produits, l'installation comprenant des moyens pour ajuster sélectivement la hauteur de ladite extrémité libre par rapport à un fond de la benne.
- les moyens de contrôle comprennent des moyens pour déterminer pour chaque benne, à partir des paramètres de fonctionnement correspondant à ladite benne, la hauteur de l'extrémité libre de la manche par rapport au fond de ladite benne.
- les moyens de transfert sont exclusivement gravitaires.

D'autres caractéristiques et avantages de l'invention ressortiront de la description détaillée qui en est donnée ci-dessous, à titre indicatif et nullement limitatif, en référence aux figures annexées parmi lesquelles :
- la figure 1 est une vu en élévation, de côté, d'une installation conforme à l'invention, dans une situation où une benne est placée sous le stockage, et où l'opération de transfert des produits divisés n'a pas encore commencé ;
- la figure 2 est une vue en élévation, d'arrière en avant, de l'installation de la figure 1 ;
- la figure 3 est une vue en coupe transversale de l'installation de la figure 1, considérée selon l'incidence des flèches III, et montrant la barre de guidage de la benne mobile ;
- la figure 4 est une vue similaire à celle de la figure 1, illustrant la situation de l'installation au début de l'opération de transfert des produits divisés dans la benne, et montrant la manche de transfert dans sa position déployée ;
- la figure 5 est une vue similaire à celle de la figure 4, à l'étape suivante de l'opération de transfert, et montrant la manche partiellement rétractée de manière à contrôler l'épaisseur de la couche de produit déposé sur le fond de la benne ;
- la figure 6 est une vue en coupe transversale considérée selon l'incidence des flèches VI de la figure 5 ;
- la figure 7 est une vue similaire à celle de la figure 5, montrant l'installation à la fin du déplacement longitudinal de la benne, quand toute la charge de produits a été transférée dans la benne ; et
- la figure 8 est une vue similaire à celle de la figure 7, montrant la manche entièrement rétractée et la barre de guidage escamotée.

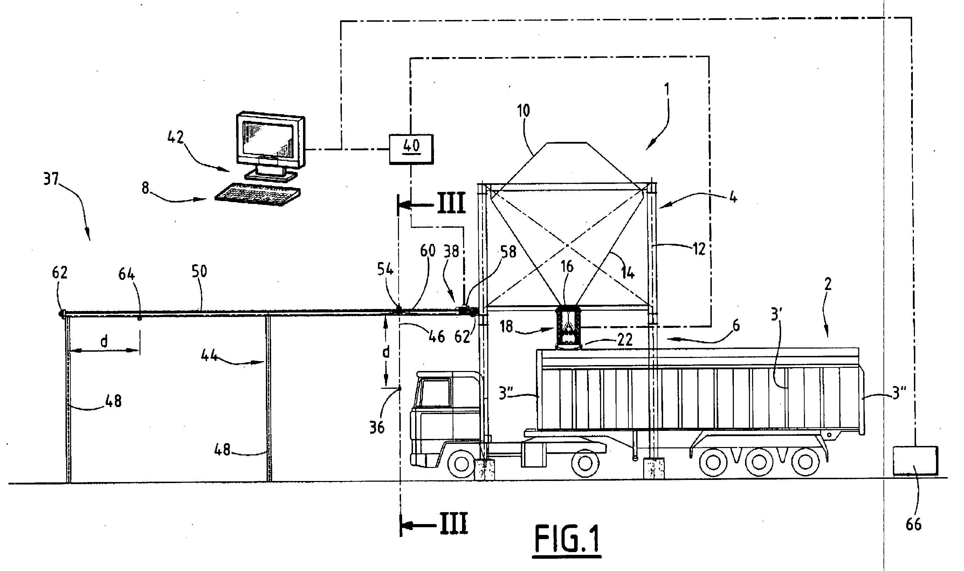

L'installation 1 représentée sur la figure 1 est prévue pour charger des produits divisés dans des bennes mobiles 2 ouvertes vers le haut. L'installation est destinée par exemple à charger des produits finement divisés en particules de petites tailles, par exemple des graviers, des granulats, des céréales, du sable, voire des produits pulvérulents constitués d'une poudre d'une matière solide.

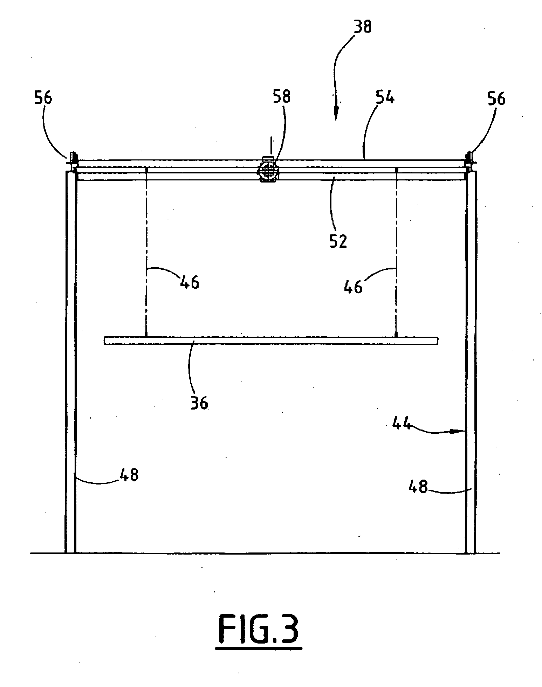

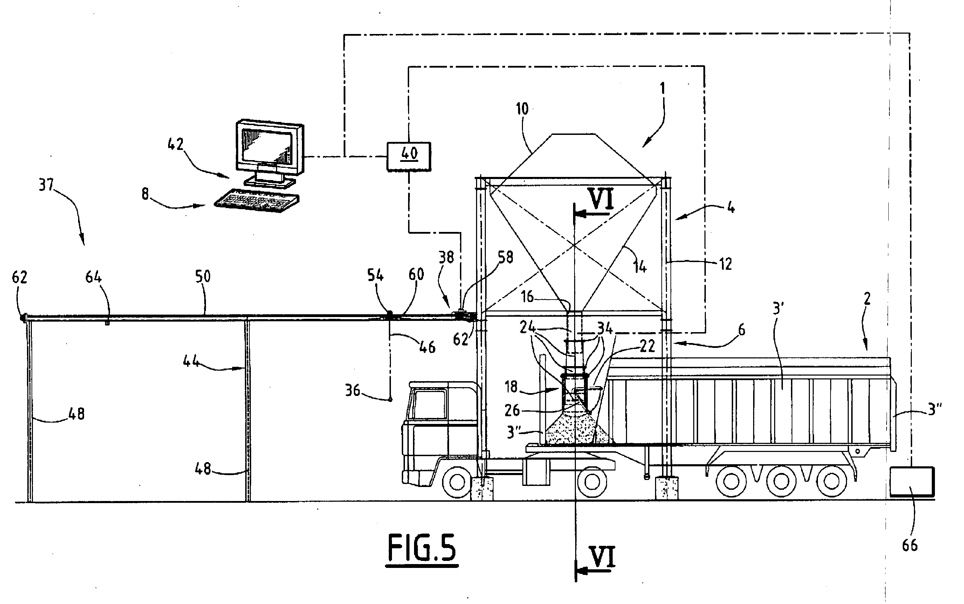

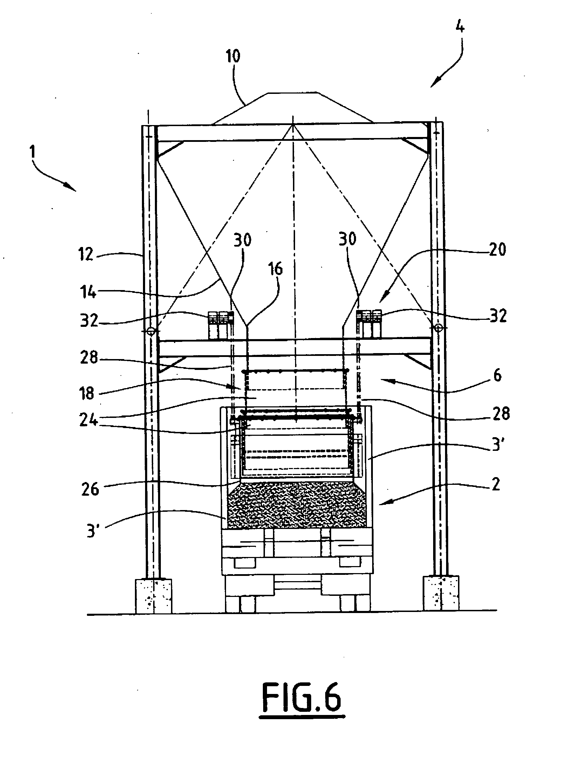

Les bennes 2 sont typiquement des bennes parallélépipédiques, ouvertes par une face supérieure. Elles sont délimitées chacune par un fond, deux parois longitudinales 3' parallèles entre elles, et deux parois transversales 3" avant et arrière également parallèles entre elles. La benne est allongée longitudinalement, les parois longitudinales 3' étant plus longues que les parois transversales 3". Les bennes 2 sont par exemple montées sur des remorques routières tractées, comme dans l'exemple de réalisation des figures 1 à 8, ou sur des wagons ferroviaires ou sur tout autre moyen de support adapté. L'avant et l'arrière sont entendus ici relativement au sens de déplacement normal de la remorque ou du wagon.

L'installation de chargement 1 comprend :
- un stockage 4 de produits divisés ;
- des moyens 6 de transfert des produits divisés depuis le stockage 4 dans la benne 2 ;
- des moyens 8 pour guider la benne 2 en déplacement par rapport au stockage pendant le transfert des produits depuis le stockage 4 dans la benne 2.

Le stockage 4 comporte typiquement une trémie 10 de réception et de stockage des produits à charger, et un châssis 12 de support de la trémie. Le châssis 12 est constitué de poutrelles métalliques ancrées dans le sol. La trémie 10 est placée en hauteur par rapport au sol, à une élévation suffisante pour que la benne puisse passer sous la trémie.

La trémie 10 est de type connu en soit, et comporte un fond sensiblement tronconique convergeant vers un orifice de sortie 16 situé en point bas. Sa capacité correspond sensiblement à la capacité des bennes les plus grandes.

La trémie 10 est alimentée en produits à charger par l'intermédiaire d'un convoyeur, non représenté, déversant les produits à l'intérieur de la trémie par une ouverture située en un point haut de ladite trémie.

Comme le montrent les figures 1, 2, 4 et 6, les moyens de transfert 6 comprennent une manche télescopique 18, des moyens 20 pour ajuster la position de la manche par rapport au fond de la benne en déployant ou rétractant sélectivement la manche télescopique, ainsi qu'un casque 22 d'obturation de la manche.

La manche 18 comporte une pluralité d'éléments tubulaires 24, de sections décroissantes, emboîtés les uns dans les autres comme des poupées russes. Chaque élément tubulaire 24 a une section rectangulaire. L'élément 24 le plus grand a une largeur transversale correspondant sensiblement à celle de la benne. L'élément 24 de plus petite section est monté autour de la sortie 16 de la trémie. La manche comporte par exemple cinq éléments 24. Le casque 22 est monté sur l'élément tubulaire de plus grande section. Le casque 22 est apte à sélectivement obturer ou dégager l'extrémité dudit élément 24 opposée à la trémie 10. Cette extrémité correspond à l'extrémité libre 26 de la manche par laquelle les produits sont libérés. Les moyens de transfert 6 comportent des moyens de commande pour déplacer le casque 22 entre ses positions de dégagement et d'obturation. Ces moyens de commande sont connus et ne seront pas décrits en détail ici.

Les moyens 20 pour déployer ou rétracter la manche télescopique comportent typiquement deux chaînes 28, deux tambours 30 autour desquels les chaînes 28 sont susceptibles de s'enrouler, et deux moteurs 32 aptes à faire tourner les tambours 30 autour de leurs axes respectifs dans les deux sens de rotation possibles, en vue d'enrouler ou de dérouler les chaînes.

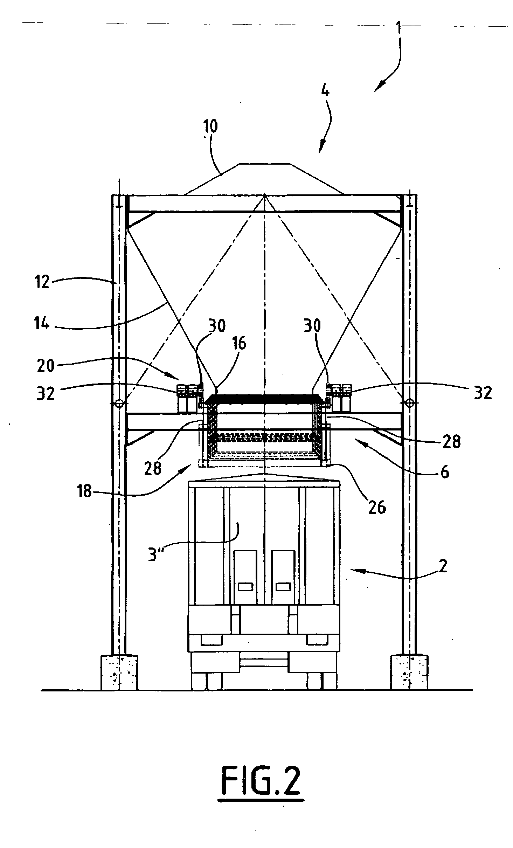

Les tambours 30 et les moteurs 32 sont rigidement fixés au châssis 12 du stockage, comme le montre la figure 2.

Les chaînes 28 sont fixées par une extrémité à la manche 24 de section maximale. Les chaînes 28 sont par ailleurs fixées chacune par leur extrémité opposée à un des tambours 30.

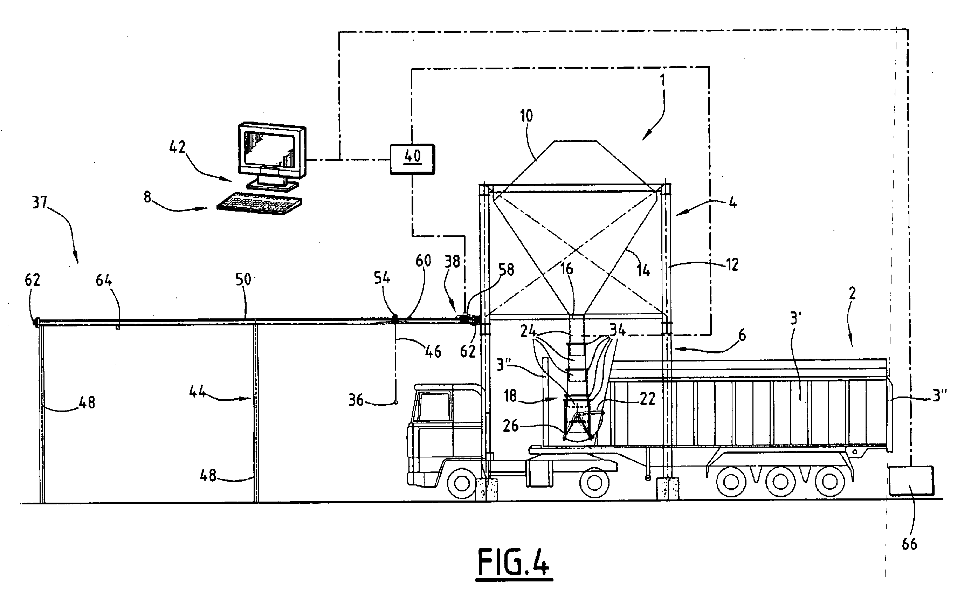

Chacun des quatre éléments tubulaires 24 inférieurs présentent une collerette périphérique 34 à son extrémité supérieure (figure 4). Les éléments 24 sont engagés librement les uns dans les autres, l'élément de plus grande section étant le plus bas, et les éléments de sections plus faibles étant étagés au-dessus de l'élément de section maximum. Quand les chaînes 28 sont presque entièrement enroulées autour des tambours 30, l'élément 24 de section maximum est maintenu au niveau de la sortie 16 de la trémie, comme illustré sur la figure 1. Les éléments tubulaires 24 reposent les uns sur les autres par l'intermédiaire de leurs collerettes 34 respectives. La manche 18 est dans son état rétracté.

Chaque élément tubulaire 24 est libre de coulisser par rapport à l'élément 24 de section immédiatement inférieure, placé au-dessus de lui. Toutefois, ce mouvement de coulissement est limité vers le haut par la collerette 34 dudit élément venant porter contre la collerette 34 de l'élément de section inférieure. Vers le bas, la course est limitée par des moyens de butées complémentaires (non représentés), ménagés sur ces deux éléments 24.

Quand les chaînes 28 sont déroulées par rotation des tambours 30, les quatre éléments tubulaires inférieurs, dans un premier temps, descendent sous l'effet de leur poids. L'élément tubulaire supérieur est rigidement fixé à la trémie et ne bouge pas. Quand le deuxième élément tubulaire à partir du haut arrive en butée par rapport à l'élément supérieur, il reste en place et les trois éléments tubulaires inférieurs continuent leur descente jusqu'à ce que le troisième élément tubulaire arrive en butée. Les éléments tubulaires se déploient ainsi les uns après les autres, à partir de l'élément tubulaire supérieur, jusqu'à ce que le déroulement des chaînes 28 soit stoppé.

Dans l'invention, au cours de l'opération de chargement, la manche 18 est fixe par rapport au stockage, et le tracteur déplace la benne par rapport à la structure. La benne se déplace vers l'avant et défile longitudinalement sous la manche 18. Les moyens de guidage 8 sont prévus pour aider le conducteur du tracteur à régler le mouvement de la benne. Ils comportent un repère visuel 36, un portique 37, des moyens 38 pour déplacer le repère visuel longitudinalement par rapport au stockage 4 le long du portique 37, des moyens 40 programmables de contrôle des moyens de déplacement 38, et des moyens 42 pour entrer dans les moyens de contrôle 40 des paramètres de fonctionnement de l'installation relatif à chaque benne à charger.

Comme le montrent les figures 1, 3 et 6, le repère visuel 36 est une barre transversale suspendue par l'intermédiaire de chaînes 46. La barre 36 est suspendue à un niveau correspondant sensiblement au niveau du pare-brise du tracteur auquel la benne est accouplée.

Le portique 37 est une structure constituée de poutrelles métalliques accolées au stockage 4. Le portique 37 comporte plusieurs poteaux verticaux de supports 48, plusieurs poutrelles longitudinales 50 rigidement fixées aux poteaux 48 et plusieurs poutrelles transversales 52 de rigidification, rigidement fixées aux poteaux 48 et aux poutrelles longitudinales 50. Les poutrelles longitudinales et transversales 50 et 52 sont disposées à une élévation correspondant sensiblement à celle de la sortie 16 de la trémie.

Le portique 37 présente transversalement sensiblement la même largeur que le châssis 12.

Les moyens 38 pour déplacer la barre 36 comprennent une poutrelle transversale mobile 54, deux rails longitudinaux 56 de guidage des extrémités de la poutrelle 54, un moteur 58 et une chaîne de transmission 60.

La poutrelle mobile 54 présente transversalement sensiblement la même largeur que le portique 37. Elle se déplace longitudinalement le long des rails 56. Par exemple, les poutrelles longitudinales 50 constituent les rails de guidage 56, ou portent les rails 56.

La barre 36 est suspendue à la poutrelle mobile 54 par l'intermédiaire des chaînes 46.

La chaîne de transmission 60 est typiquement un câble replié en boucle, autour de deux poulies d'extrémité 62. Les poulies 62 sont situées longitudinalement aux deux extrémités des rails 56. Transversalement, les galets 62 sont situés sensiblement au centre de la poutrelle 54. Le câble 60 est engagé dans les gorges respectives des poulies 62. L'une des deux poulies 62 est susceptible d'être entraînée en rotation par le moteur 58, dans l'un ou l'autre sélectivement des deux sens de rotation possibles. La poutrelle transversale 54 est rigidement fixée en un point du câble 60.

Les moyens de contrôle 40 comprennent par exemple un calculateur apte à commander à la fois le moteur 58, les moteurs 32 permettant de dérouler ou d'enrouler les chaînes 28, et l'actionneur entraînant le casque 22 entre ses positions d'obturation et de dégagement.

Les moyens 42 permettant d'entrer dans le calculateur 40 les paramètres de fonctionnement de l'installation comprennent par exemple un ordinateur relié aux moyens de contrôle 40. Les moyens de contrôle 40 et l'ordinateur 42 sont programmés pour permettre d'entrer les paramètres de fonctionnement suivants pour chaque benne à charger :
- un numéro d'identification de la benne à charger ;
- la largeur transversale, la longueur longitudinale et la hauteur utile de la benne à charger ;
- un paramètre représentatif de la quantité de produit à charger dans la benne, par exemple le poids de produits à charger.

A partir de ces éléments, les moyens de contrôle sont aptes à déterminer :
- la hauteur de la couche de produit sur le fond de la benne, en considérant que la quantité de produits à charger est répartie sensiblement uniformément sur tout le fond de la benne ;
- la position initiale du repère visuel, au moment où l'opération de chargement de la benne commence ;
- la position finale du repère visuel, au moment où l'opération de chargement est terminée ;
- la vitesse de déplacement longitudinale du repère visuel, entre la position de départ et la position finale.

La position initiale de la barre 36 est évaluée en fonction de la longueur longitudinale de la benne, en prenant en compte que la benne initialement doit être placée avec son extrémité avant sous la trémie. On entend par là que la manche 18 doit être placée au droit du fond de la benne, légèrement à l'arrière de la paroi transversale avant 3" de la benne.

La position initiale de la barre 36 est choisie pour que, dans cette position de la benne, la barre 36 soit longitudinalement légèrement à l'avant de la cabine du tracteur auquel est accouplée la benne. Cette situation est illustrée sur la figure 4.

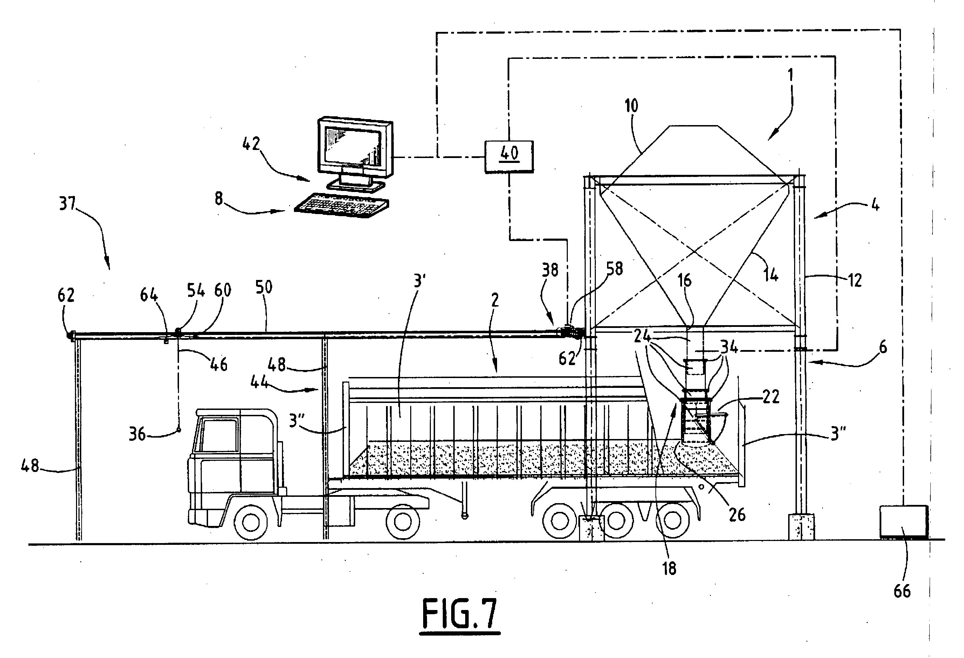

La position finale de la barre 36 est évaluée en fonction de la longueur longitudinale de la benne, en prenant en compte que l'extrémité arrière de la benne doit être située sous la trémie à la fin de l'opération de chargement. Plus précisément, comme illustré sur la figure 7, la manche 18, à la fin de l'opération de chargement, doit être située au droit du fond de la benne, légèrement à l'avant de la paroi transversale arrière 3" de la benne.

La vitesse de déplacement du repère entre ses positions initiales et finales est calculée selon la procédure suivante :
- on évalue d'abord le débit de produit s'écoulant dans la benne à travers la manche quand le casque 22 est dans sa position de dégagement, en fonction de la nature des produits à transférer, et des caractéristiques géométriques de la trémie et de la manche ;
- on évalue le temps nécessaire pour transférer dans la benne la quantité de produits enregistrés dans les moyens de contrôle ;
- on en déduit la vitesse de déplacement de la benne sous la manche 18 en supposant que la manche est située à l'avant de la benne au moment où le produit commence à s'écouler dans la benne (situation de la figure 4), que la manche est située à l'arrière de la benne au moment où le produit s'arrête de s'écouler dans la benne (situation de la figure 7), et que le déplacement de la benne se fait à vitesse constante entre ces deux instants. La vitesse ainsi calculée correspond à la vitesse de déplacement de la barre 36 entre ses positions initiale et finale.

Les moyens de guidage 8 comportent encore une barre transversale 64 de relevage de la barre de guidage 36 en fin de course de ladite barre 36. La barre de relevage 64 s'étend transversalement sur toute la largeur du portique 37, et est rigidement fixée aux poutrelles longitudinales 50. Elle est située longitudinalement à une distance d du galet 62 le plus éloigné de la trémie. La distance d correspond sensiblement à la hauteur des chaînes 46 de suspension de la barre de guidage.

Enfin, l'installation comporte une borne 66 pourvue de moyens pour entrer le numéro d'identification de la borne à charger et de moyens pour transmettre ce numéro d'identification aux moyens de contrôle 40. Les moyens d'entrée sont par exemple un clavier ou un lecteur de code-barre.

Le fonctionnement de l'installation de chargement décrite ci-dessus va maintenant être détaillé.

A l'état initial, on considère que la trémie est vide, et qu'aucune benne n'est placée sous celle-ci.

Un opérateur entre d'abord dans l'ordinateur 42 les numéros d'identification d'une série de bennes à charger, et, pour chaque benne, les caractéristiques de ladite benne et la quantité de produit à charger dans ladite benne.

Puis, quand le tracteur amenant la première benne à charger arrive dans l'installation, le conducteur arrête le tracteur, introduit le numéro d'identification de la benne à charger sur la borne 66.

Le terminal 66 communique le numéro d'identification de la benne à charger au calculateur 40. Celui-ci calcule alors la position initiale de la barre de guidage 36, et commande aux moyens 38 de déplacer la barre de guidage 36 jusqu'à sa position initiale.

Le conducteur vient alors placer le tracteur de telle sorte que la manche 18 soit au droit de l'avant de la benne.

Parallèlement à ceci, la quantité de produits à charger dans la benne est déversée dans la trémie 14. Pendant cette opération, les moyens de contrôle 40 maintiennent le casque 22 dans sa position d'obturation.

Le conducteur, quand il vient placer la benne dans sa position initiale sous la trémie, est guidé par la barre 36. Il sait que quand la barre 36 est dans sa position initiale et qu'il place son tracteur de telle sorte que le barre soit par exemple à un mètre de l'avant de la cabine, alors l'avant de la benne sera sensiblement au droit de la manche 18.

Une fois la benne en place à sa position initiale sous la trémie, un opérateur lance l'opération de chargement de la benne, par exemple à l'aide de l'ordinateur 42 qui commande les moyens de contrôle 40. Les moyens de contrôle 40 déterminent alors la hauteur des produits à déposer sur le fond de la benne, puis ils commandent le déploiement de la manche télescopique, de manière à amener l'extrémité libre 26 de celle-ci à proximité du fond de la benne (situation de la figure 4). Il est à noter qu'à cet instant la manche 18 est remplie par une colonne de produits.

Les moyens de contrôle 40 commandent ensuite l'ouverture de la manche 18 en faisant passer le casque 22 de sa position d'obturation de la manche à sa position de dégagement. Les produits contenus dans la manche 18 commencent à couler dans la benne, jusqu'à ce que soit formé un tas de produit occupant tout l'espace entre l'extrémité 26 de la manche et le fond de la benne. Ce tas bloque l'écoulement de la colonne de produits contenu dans la manche. Les moyens de contrôle 40 commandent ensuite la remontée progressive de la manche 18 par rétraction de ladite manche, jusqu'à ce que l'extrémité libre de la manche soit située à une hauteur correspondant à l'épaisseur de la couche de produits calculée précédemment par les moyens 40. Une quantité supplémentaire de produits s'écoule hors de la manche, puis l'écoulement s'arrête quand un tas de produits occupant tout l'espace entre l'extrémité 26 et le fond de la benne est de nouveau constitué.

Les moyens de contrôle 40 commandent alors aux moyens de déplacement de la barre 36 de déplacer celle-ci à partir de sa position initiale vers sa position finale, avec une vitesse constante calculée par les moyens de contrôle 40 selon la procédure décrite ci-dessus. Le conducteur du tracteur déplace la benne, en s'efforçant de maintenir un écartement constant entre la barre 36 qui se déplace et la cabine du tracteur. La benne défile alors sous la manche 18, de telle sorte que les produits s'écoulent hors de la manche et se répartissent en une couche uniforme sur le fond de la benne.

Les paramètres de fonctionnement de l'installation sont calculés de telle sorte que, quand la barre arrive à sa position finale, la manche arrive à l'extrémité arrière de la benne. Cet instant correspond sensiblement au moment où les dernières particules de produits à charger s'écoulent à travers la manche.

On se trouve alors dans la situation de la figure 7.

Les moyens de contrôle 40 commandent alors aux moteurs 32 d'enrouler les câbles 28, de façon à rétracter la manche 18, et commandent au casque 22 de passer à sa position d'obturation de la manche.

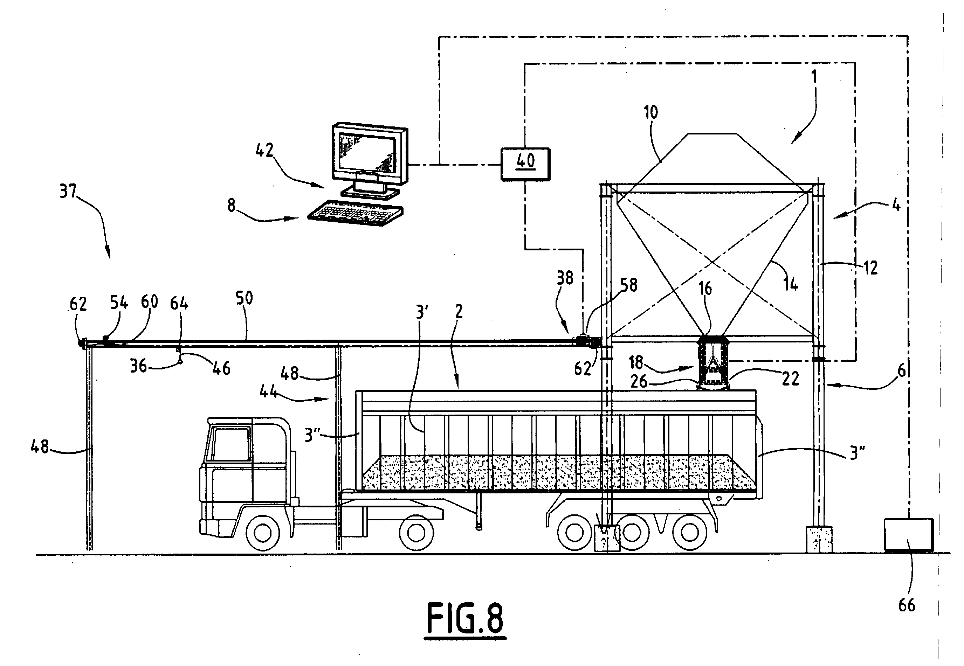

Pendant que la manche se rétracte, les moyens de contrôle 40 commandent au moyen de déplacements de la barre de guidage 36 de continuer de déplacer ladite barre vers le galet 62 situé le plus loin de la trémie. Comme le montre la figure 8, dès que la poutrelle transversale 54 dépasse la barre de relevage 64, les parties des chaînes 46 de support de la barre 36 liées à la poutrelle transversale 54 adopte une orientation horizontale, les parties des chaînes 46 liées à la barre 36 restant verticales. Ainsi, au fur et à mesure que la poutrelle transversale 54 se rapproche du galet 62, la barre 36 se relève. Quand la poutrelle 54 est à proximité du galet 62, la barre 36 est située au-dessus de la benne, de telle sorte que le tracteur peut avancer pour quitter l'installation de chargement.

Pendant que le tracteur évacue la benne chargée de l'installation de chargement, un nouveau tracteur vient placer une benne vide à charger sous la trémie, après avoir introduit le numéro d'identification de la nouvelle benne sur la borne 66. Le processus de chargement de la nouvelle benne est identique à celui décrit ci-dessus.

L'installation de chargement décrite ci-dessus présente de multiples avantages.

Du fait qu'elle comprend des moyens pour guider la benne en déplacement par rapport au stockage pendant le transfert des produits depuis le stockage dans la benne, il est possible d'utiliser une manche fixe pour réaliser le transfert, le déplacement relatif entre le stockage et la benne étant réalisé en déplaçant la benne par rapport au stockage. Ainsi, les moyens de transfert peuvent être extrêmement simples et donc peu coûteux.

Les moyens permettant de guider la benne en déplacement par rapport au stockage sont extrêmement fiables, du fait qu'il est facile pour le conducteur du tracteur de suivre le déplacement du repère visuel et de maintenir une distance sensiblement constante entre le repère et le tracteur.

L'installation est d'une utilisation extrêmement conviviale du fait qu'un grand nombre d'opérations sont automatisées.

En particulier, il est possible d'entrer par avance dans les moyens de contrôle, les paramètres de fonctionnement relatifs à toute une série de bennes à charger.

A partir des informations introduites par l'opérateur dans les moyens de contrôle, lesdits moyens de contrôle calculent la position initiale, la position finale, et la vitesse de déplacement du repère visuel ainsi que la hauteur de la couche de produits à déposer au fond de la benne.

Le transfert des produits dans la benne est réalisé en limitant au maximum les projections de poussières du fait que la manche est constamment remplie par une colonne de produits et qu'on déplace la manche longitudinalement à une hauteur constante par rapport au fond. Cette hauteur correspondant à l'épaisseur de la couche de produits à déposer sur le fond. Les produits s'écoulent vers l'arrière du tas déjà formé, au fur et à mesure que la benne se déplace, sur une hauteur limitée correspondant au maximum à l'épaisseur de la couche de produits.

Ceci permet également de contrôler de manière très simple la hauteur de la couche de produit déposée.

L'installation décrite ci-dessus peut présenter de multiples variantes.

Les moyens de guidage de la benne peuvent ne pas être une barre déplacée par des moyens d'entraînement motorisés. Ainsi, la barre peut être remplacée par tout autre type de repères visuels facilement visibles pour le conducteur du camion. Ce repère peut être un panneau, des bandes verticales souples ou rigides, ou tout autre type de repères adaptés.

Le repère visuel n'est pas nécessairement suspendu à un portique. Il peut se dresser à partir du sol. Ainsi, le repère visuel peut être constitué par une ou plusieurs perches guidées dans des rails fixées au sol. Les perches peuvent se coucher en fin de course, ou s'écarter latéralement pour laisser passer le tracteur.

Il est également possible d'utiliser des moyens de guidage comprenant une ou plusieurs rampes lumineuses longitudinales. Chaque rampe est dans ce cas constituée d'une série de lampes alignées longitudinalement. Les lampes s'allument progressivement, au fur et à mesure de l'avancement souhaité de la benne.

Il est possible si nécessaire d'ajouter une bande transporteuse entre la sortie de la trémie et la manche, ou tout autre élément de transfert.

Dans une variante non préférée, on peut combiner dans la même installation une manche mobile par rapport au stockage, et des moyens de guidage de la benne par rapport à ce même stockage.

Egalement dans une variante non préférée de l'invention, il est possible de prévoir que la manche n'est pas télescopique. Dans ce cas, il n'est pas possible de contrôler la hauteur de la couche de produit déposée sur le fond de la benne en ajustant l'écartement entre l'extrémité libre de la manche et le fond de la benne. Par ailleurs, du fait que les produits tombent au moins de la hauteur de la benne, il est plus difficile de limiter la dispersion de poussière.

D'autres moyens de déplacement du repère visuel que ceux décrits ci-dessus peuvent être considérés. Ces moyens peuvent par exemple comprendre une crémaillère et une roue dentée.

Les moyens de contrôle automatiques peuvent piloter seulement le déplacement du repère visuel. Le déploiement ou la rétractation de la manche peut être piloté séparément par un opérateur, de même que le déplacement du casque d'obturation entre ses positions de dégagement et d'obturation.

Inversement, il est possible de prévoir que les moyens de contrôle pilotent aussi la bande transporteuse permettant de recharger la trémie.

Les moyens de contrôle peuvent ne calculer à partir des paramètres de fonctionnement relatifs à chaque benne à charger que la position finale du repère visuel et sa vitesse de déplacement, ou encore seulement la vitesse de déplacement. Dans ce cas, on suppose que la position initiale du repère visuel est toujours la même quelle que soit la benne à charger.

Les moyens de contrôle peuvent ne pas comporter une borne spéciale permettant au conducteur d'entrer le numéro d'identification de la benne à charger. Dans ce cas, le conducteur peut entrer lui-même directement ce numéro d'identification sur l'ordinateur 42, ou communiquer celui-ci à un opérateur qui l'entre dans l'ordinateur 42.

Les moyens de guidage de la benne peuvent ne pas comprendre une barre d'escamotage du repère visuel. Dans ce cas, le tracteur et la benne peuvent ressortir de l'installation de chargement en marche arrière.

## Revendications

1. Installation de chargement de produits divisés dans une benne (2) mobile ouverte vers le haut, l'installation (1) comprenant un stockage (4) de produits divisés et des moyens (6) de transfert des produits divisés depuis le stockage (4) dans la benne (2), l'installation (1) comprenant des moyens (8) pour guider la benne (2) en déplacement par rapport au stockage (4) pendant le transfert des produits depuis le stockage (4) dans la benne (2), la benne (2) présentant une forme générale allongée longitudinalement, les moyens de guidage (8) étant aptes à guider la benne (2) en déplacement longitudinalement par rapport au stockage (4) pendant le transfert des produits depuis le stockage dans la benne (2), **caractérisée en ce que** la benne (2) est liée à un véhicule susceptible d'être piloté par un conducteur, les moyens de guidage (8) comprenant un repère visuel (36) mobile susceptible d'être vu par ledit conducteur.

2. Installation selon la revendication 1, **caractérisée en ce que** les moyens de transfert (6) comprennent une manche télescopique (18) fixe longitudinalement par rapport au stockage (4).

3. Installation selon la revendication 2, **caractérisée en ce que** les moyens de transfert (6) comprennent des moyens (22) pour sélectivement obturer ou dégager une extrémité libre (26) de la manche (18).

4. Installation selon l'une quelconque des revendications précédentes, **caractérisée en ce que** les moyens de guidage (8) comprennent des moyens (38) pour déplacer le repère visuel (36) longitudinalement, des moyens (40) de contrôle programmables des moyens de déplacement (38), et des moyens (42) pour entrer dans les moyens de contrôle (40) des paramètres de fonctionnement relatifs à chaque benne (2) à charger, ces paramètres comprenant au moins des caractéristiques géométriques de chaque benne (2) à charger et un paramètre représentatif de la quantité de produits à charger dans chaque benne (2).

5. Installation selon la revendication 4, **caractérisée en ce que** les moyens de contrôle (40) comprennent des moyens pour déterminer pour chaque benne (2), à partir des paramètres de fonctionnement correspondant à ladite benne (2), au moins une vitesse de déplacement du repère visuel (36).

6. Installation selon la revendication 5, **caractérisée en ce que** la manche (18) présente une extrémité libre (26) de libération des produits, l'installation (1) comprenant des moyens (20) pour ajuster sélectivement la hauteur de ladite extrémité libre (26) par rapport à un fond de la benne (2).

7. Installation selon la revendication 6, **caractérisée en ce que** les moyens (40) de contrôle comprennent des moyens pour déterminer pour chaque benne (2), à partir des paramètres de fonctionnement correspondant à ladite benne (2), la hauteur de l'extrémité libre (26) de la manche (18) par rapport au fond de ladite benne (2).

8. Installation selon l'une quelconque des revendications précédentes, **caractérisée en ce que** les moyens de transfert (6) sont exclusivement gravitaires.

## Claims

1. Installation for loading divided products into a movable skip (2) which is open towards the top, said installation (1) comprising a storage system (4) for divided products and means (5) for transferring said divided products from the storage system (4) into the skip (2), the installation (1) comprising means (8) for guiding the skip (2) in displacement in relation to the storage system (4) during the transfer of the products from the storage system (4) into the skip (2), said skip (2) having a general shape which is elongated longitudinally, the guide means (8) being capable of guiding the skip (2) in displacement longitudinally in relation to the storage system (4) during the transfer of the products from said storage system into the skip (2), **characterised in that** the skip (2) is linked to a vehicle which is capable of being guided by a driver, the guide means (8) comprising a movable visual reference mark (36) which is capable of being seen by the said driver.

2. Installation according to claim 1, **characterised in that** the transfer means (6) comprise a telescopic chute (18) which is longitudinally stationary in relation to the storage system (4).

3. Installation according to claim 2, **characterised in that** the transfer means (6) comprise means (22) for selectively blocking or unblocking a free end (26) of the chute (18).

4. Installation according to any of the preceding claims, **characterised in that** the guide means (8) comprise means (38) for displacing the reference mark (36) longitudinally, programmable means (40) for controlling the displacement means (38), and means (42) for entering, in the control means (40), operating parameter relating to each skip (2) which is to be loaded, the said parameters comprising at least geometrical characteristics of each skip (2) which is to be loaded and a parameter which is representative of the quantity of products to be loaded into each skip (2).

5. Installation according to claim 4, **characterised in that** the control means (40) comprise means for determining for each skep (2), from operating parameters corresponding to the said skip (2), at least one speed of displacement of the visual reference mark (36).

6. Installation according to claim 5, **characterised in that** the chute (18) has a free end (26) for releasing the products, the installation (1) comprising means (20) for selectively adjusting the height of the said free end (26) in relation to a bottom of the skip (2).

7. Installation according to claim 6, **characterised in that** the control means (40) comprise means for determining for each skip (2), from operating parameters corresponding to the said skip (2), the height of the free end (26) of the chute (18) in relation to the bottom of the said skip (2).

8. Installation according to any of the preceding claims, **characterised in that** the transfer means (6) are exclusively gravity ones.

## Patentansprüche

1. Anlage zum Laden von Schüttgütern in einen mobilen Kübel (2), der nach oben offen ist, wobei die Anlage (1) einen Speicher (4) für Schüttgüter und Mittel (6) für den Transport der Schüttgüter von dem Speicher (4) in den Kübel (2) umfasst, wobei die Anlage (1) Mittel (8) zum Führen des Kübels (2) in der Bewegung relativ zu dem Speicher (4) während des Transports der Schüttgüter von dem Speicher (4) in den Kübel (2) umfasst, wobei der Kübel (2) eine allgemein in Längsrichtung langgezogene Form aufweist, wobei die Führungsmittel (8) dafür geeignet sind, den Kübel (2) während des Transports der Schüttgüter von dem Speicher (4) in den Kübel (2) in der Bewegung in Längsrichtung relativ zu dem Speicher (4) zu führen, **dadurch gekennzeichnet, dass** der Kübel (2) mit einem Fahrzeug verbunden ist, das von einem Fahrer gesteuert werden kann, wobei die Führungsmittel (8) eine mobile visuelle Kennung (36) umfassen, die für den Fahrer sichtbar ist.

2. Anlage nach Anspruch 1, **dadurch gekennzeichnet, dass** die Transportmittel (6) einen teleskopartigen Griff (18) umfassen, der relativ zu dem Speicher (4) in Längsrichtung ortsfest ist.

3. Anlage nach Anspruch 2, **dadurch gekennzeichnet, dass** die Transportmittel (6) Mittel (22) umfassen, um ein freies Ende (26) des Griffs (18) selektiv zu verschließen oder freizulegen.

4. Anlage nach einem der vorhergehenden Anspruche, **dadurch gekennzeichnet, dass** die Führungsmittel (8) Mittel (38) für die Bewegung der visuellen Kennung (36) in Längsrichtung, programmierbare Mittel (40) für die Steuerung der Bewegungsmittel (38) und Mittel (42) für die Eingabe von Betriebsparametern in Bezug auf jeden zu beladenden Kübel (2) in die Steuermittel (40) umfassen, wobei diese Parameter zumindest geometrische Merkmale jedes zu beladenden Kübels (2) und einen Parameter umfassen, der für die Menge der in jeden Kübel (2) zu ladenden Güter repräsentativ ist.

5. Anlage nach Anspruch 4, dadurch gekennzeirnnet, dass die Steuermittel (40) Mittel umfassen, um für jeden Kübel (2), ausgehend von den diesem Kübel (2) entsprechenden Betriebsparametern, zumindest eine Geschwindigkeit für die Bewegung der visuellen Kennung (36) zu bestimmen.

6. Anlage nach Anspruch 5, dadurch gekenntzeichnet, dass der Griff (18) ein freies Ende (26) zum Freigeben der Güter aufweist, wobei die Anlage (1) Mittel (20) umfasst, um die Höhe des freien Endes (26) relativ zu einem Boden des Kübels (2) selektiv einzustellen,

7. Anlage nach Anspruch 6, **dadurch gekennzeichnet, dass** die Steuermittel (40) Mittel umfassen, um für jeden Kübel (2), ausgehend von den diesem Kübel (2) entsprechenden Betriebsparametern, die Höhe des freien Endes (26) des Griffs (18) relativ zu dem Boden des Kübels (2) zu bestimmen.

8. Anlage nach einem der vorhergehenden Ansprüche, **dadurch gekennzeichnet, dass** die Transportmittel (6) ausschließlich gravitär sind.
